# EUROPEAN PATENT SPECIFICATION

(11) **EP 3 830 453 B1**
(45) Date of publication and mention of the grant of the patent: **31.01.2024**
(21) Application number: 19737788.0
(22) Date of filing: 16.07.2019
(51) Int. Cl.: F16H 61/4096, B60K 6/12, F16H 61/4035, F16H 61/4157

(54) **HYDRAULIC ENERGY MANAGEMENT SYSTEM FOR HYDROSTATIC TRANSMISSION**
HYDRAULISCHES ENERGIEVERWALTUNGSSYSTEM FÜR EIN HYDROSTATISCHES GETRIEBE
SYSTÈME DE GESTION D'ÉNERGIE HYDRAULIQUE POUR TRANSMISSION HYDROSTATIQUE

(30) Priority: 03.08.2018 IT 201800007829
(43) Date of publication of application: 09.06.2021
(73) Proprietor: CNH Industrial Italia S.p.A., 10156 Torino (IT)
(72) Inventor: BENEVELLI, Alessandro, 42020 Albinea Reggio Nell"Emilia (IT); MARINIELLO, Ciro, 41043 Formigine (IT); PINTORE, Francesco, 41121 Modena (IT)
(74) Representative: CNH Industrial IP Department
(86) International application number: PCT/EP2019/069102
(87) International publication number: WO 2020/025311

(56) References cited:
- US-A1- 2009 084 102
- US-A1- 2016 375 752
- US-A1- 2018 128 369

## Description

### TECHNICAL FIELD

The present invention concerns a hydraulic energy management system for hydrostatic transmission, in particular a hydraulic transmission for work vehicles such as construction equipment vehicles or agricultural vehicles.

### BACKGROUND OF THE INVENTION

Work vehicles are usually provided with hydraulic motors which are used for a plurality of operation such as movement of the vehicle; such hydraulic motors transform a hydraulic energy, stored in a working fluid in form of pressure, into mechanical energy, e.g. rotation of a shaft with a predefined velocity and torque.

The pressure of the working fluid is usually given by a pump, carried by an engine, e.g. an internal combustion engine, which is connected through a hydraulic arrangement to hydraulic the hydraulic motors.

The aforementioned hydraulic arrangements are usually realized through a high number of valves which, on function of their state allowing or not the passage of a fluid into a designed hydraulic circuit, allow a plurality of operations, such as forward and reverse motion, boost, energy recovery, between such pump and hydraulic motors.

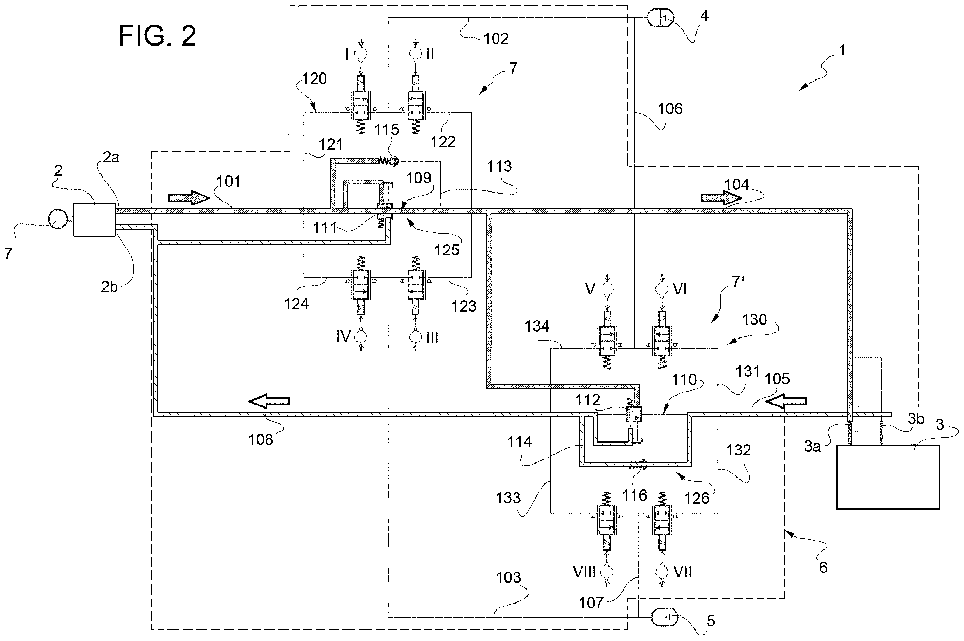

An example of such known hydraulic arrangement is disclosed in document US 2016375752 A1 in which (reference numbers as disclosed in the prior art document) a power boost hub 8 is interposed between a pump 2 carried by an internal combustion engine, hydraulic motor 3 and a high and low pressure accumulators 10, 11. Such power boost hub 8 is configured to manage a plurality of operation between pump 2 and motor 3, via a hydro-electrical circuit disclosed in figure 2.

However, hydro-electrical manifold as disclosed in the above prior art document, comprising a high number of components, are consequently costly and bulk. Moreover, the large number of valves introduces significant pressure drops which decreased the efficiency of the transmission.

Further, the hydro-electrical manifold as the one cited above comprises a plurality of sensors configured to detect a plurality of physical quantities in the transmission so as to control consequently valves to set a mode of operation of the transmission.

Another hydraulic transmission is known from US 2009084102 A1, which forms the basis for the preamble of claim 1.

In view of the above, the need is felt to provide a hydraulic transmission for work vehicles which comprises a small number of components, while allowing a plurality of operations.

An aim of the present invention is to satisfy the above mentioned needs in an optimized and cost-effective way.

### SUMMARY OF THE INVENTION

The aforementioned aim is reached by a hydraulic energy management system for hydrostatic transmission as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic view of an embodiment of a hydraulic energy management system for hydrostatic transmission according to the invention;
- Figures 2 to 10 are schematic views representing respective operation modes of the hydraulic energy management system for hydrostatic transmission of figure 1, and
- Figure 11 is a block diagram representing a control system for the hydraulic energy management system for hydrostatic transmission of figure 1.

### DETAILED DESCRIPTION OF THE INVENTION

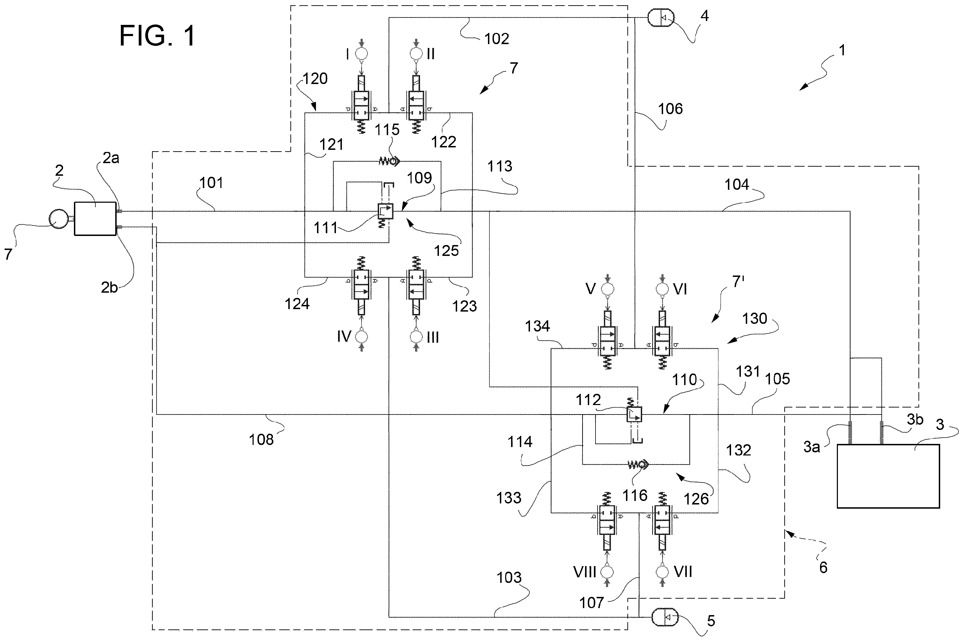

Figure 1 discloses a hydraulic energy management system for hydrostatic transmission 1 essentially comprising a pump 2, at least a hydraulic motor 3, a first accumulator 4 and a second accumulator 5, fluidly connected together thanks to a hydraulic connection module 6 according to the invention, as described hereunder.

Pump 2 is advantageously connected to an engine 7, advantageously an internal combustion engine, and hydraulic motor 3 may be connected to a final drive of a work vehicle.. Both pump 2 and motor 3, as known, comprise respective first and second connection lines 2a, 2b, 3a, 3b configured to allow the passage of an operative fluid into pump 2 and motor 3. In particular, making reference on motor 3, fluid may flow realizing a path from first connection line 3a to second connection line 3b so as to impart to vehicle transmission a first torque and may flow realizing a path from second connection line 3b to first connection line 3a so as to impart to vehicle transmission a second torque opposite to the first one. In the present description first torque is configured to move forward the vehicle transmission carried by motor 3, while second torque is configured to move reversely such vehicle transmission. Similar consideration may be applied to pump 2, considering connection lines 2a, 2b. Preferably pump 2 and motor 3 may be variable displacement pumps.

Preferably, first accumulator 4 is a high pressure accumulator while second accumulator 5 is a low pressure accumulator, e.g. two accumulators 4,5 may be house respectively fluid at a pressure of 350 bar and 50 bar. Both first and second accumulators 4, 5 may be provided with related sensors, not shown, configured to detect the level of fluid stored inside these latter. Such levels, for each accumulator 4, 5, may be:
- a high level, e.g. 85% of the maximum storable fluid pressure,
- a first intermediate level, e.g. 80% of the maximum storable fluid pressure,
- a second intermediate level, e.g. 25% of the maximum storable fluid pressure, and
- a low level, e.g. 15% of the maximum storable fluid pressure.

Accumulators 4 and 5 may be "ready" for use if fluid pressure is comprised between the above mentioned first and second intermediate levels, "fully charged" or "fully discharged" if the level is comprised between the intermediate levels and the respective high or low levels; otherwise they are not operable.

As will be described in more detail in the following, If the level is fully charged the accumulator can be only discharged, vice versa, if the accumulator are fully discharged they can only be charged. The difference between the high level threshold and the first intermediate level threshold defines an hysteresis during the discharging phase of the accumulator that allows the system to avoid oscillation. Similarly, the difference between the low level threshold and the second intermediate level threshold defines an hysteresis during the charging phase of the accumulator that allows the system to avoid oscillation

The above mentioned operative fluid may be oil of known typology for hydraulic transmission.

Hydraulic connection module 6 comprises a first subunit 7 and a second subunit 7'. First subunit 7 is fluidly connected to pump 2 through a first conduit 101, to first accumulator 4 through a second conduit 102 and to second accumulator conduit 5 through a third conduit 103 and to motor 3 via a fourth conduit 104; similarly second subunit 7' is fluidly connected to motor 3 through a fifth conduit 105, to first accumulator 4 through a sixth conduit 106, to second accumulator conduit 5 through a seventh conduit 107 and to pump 2 via an eighth conduit 108.

Advantageously conduits 101 and 104 are fluidly connected together by an intermediate conduit 109 and conduits 105 ad 108 are fluidly connected together by an intermediate conduit 110.

As described in the following, each subunit 7, 7' comprises a plurality of conduits fluidly connecting together the above defined ducts 101-108.

Subunit 7 comprises a conduit 121 fluidly connecting first conduit 101 and second conduit 102, a conduit 122 fluidly connecting second conduit 102 and fourth conduit 104, a conduit 123 fluidly connecting fourth conduit 104 and third conduit 103 and a conduit 124 fluidly connecting third conduit 103 and first conduit 101. Conduits 121, 122, 123, 124 are further fluidly connected together therefore defining a closed path 120 inside subunit 7.

Subunit 7' comprises a conduit 131 fluidly connecting fifth conduit 105 and sixth conduit 106, a conduit 132 fluidly connecting fifth conduit 105 and seventh conduit 107, a conduit 133 fluidly connecting seventh conduit 107 and eighth conduit 108 and a conduit 134 fluidly connecting eighth conduit 108 and sixth conduit 106. Conduits 131, 132, 133, 134 are further fluidly connected together therefore defining a closed path 130 inside subunit 7'.

Subunit 7 and 7'comprise moreover a single valve fluidly interposed on each of conduits 121-124 and 131-134, in particular a valve I on conduit 121, valve II on conduit 122, valve III on conduit 123, valve IV on conduit 124, valve V on conduit 134, valve VI on conduit 131, valve VII on conduit 132, valve VIII on conduit 133.

Valves I-VIII are advantageously of the same typology and may be electro-actuated proportional ON-OFF two ways - two positions valves.

Subunit 7 and subunit 7' each further comprises a hydro-mechanical valve group 125, 126 fluidly interposed respectively on intermediate conduits 109, 110 and configured to allow or deny the passage of fluid through said intermediate conduits 109, 110 which by-pass paths 120, 130, according to the direction of the fluid.

Advantageously hydro-mechanical valve groups 125, 126 each comprises a relief valve 111, 112, in particular relief valve 111 is fluidly interposed on conduit 109 downstream conduits 121, 124 and upstream conduits 122, 123 and relief valve 112 is fluidly interposed on conduit 110 downstream conduits 134, 133 and upstream conduits 131, 132.

Each hydro-mechanical valve group 125, 126 may further comprise a by-pass conduit 113, 114 fluidly by-passing relief valves 111, 112 upstream and downstream the respective above mentioned conduits 121-124 and 131-134; such by-pass conduits 113, 114 may be provided with a valve 115, 116 each fluidly interposed on the respective conduit.

Relief valve 111, 112 may be preferably double pressure pilot relief valves; in particular relief valve 111 may acquire a first pressure pilot signal on the portion of intermediate conduit 101 between conduits 121, 124 between itself and by-pass conduit 113 and a second pressure pilot signal on eighth conduit 108 upstream to subunits 7', thereby allowing passage of fluid through conduit 109 from conduit 101 to conduit 104. Similarly, relief valve 112 may acquire a first pressure pilot signal on the portion of intermediate conduit 110 between conduits 133, 134 between itself and by-pass conduit 114 and a second pressure pilot signal on fourth conduit 104 downstream to subunits 7, thereby allowing passage of fluid through conduit 110 from conduit 108 to conduit 105.

Preferably valves 115 and 116 are advantageously of the same typology and may be check valves. In particular check valve 115 may allow fluid to flow from portion of conduit 109 comprised between relief valve 111 and conduits 122, 123 to portion of conduit 109 comprised between relief valve 111 and conduits 121, 124 and not the opposite, while check valve 116 may allow fluid to flow from portion of conduit 110 comprised between relief valve 112 and conduits 131, 132 to portion of conduit 110 comprised between relief valve 111 and conduits 133, 134 and not the opposite.

Hydraulic energy management system for hydrostatic transmission 1 may comprise a control system 10 configured to control the above disclosed elements, i.e. pump 2, motor 3, accumulators 4, 5, engine 7 and valves I-VIII. To this aim, all the aforementioned elements are electrically connected to a related control unit as described below.

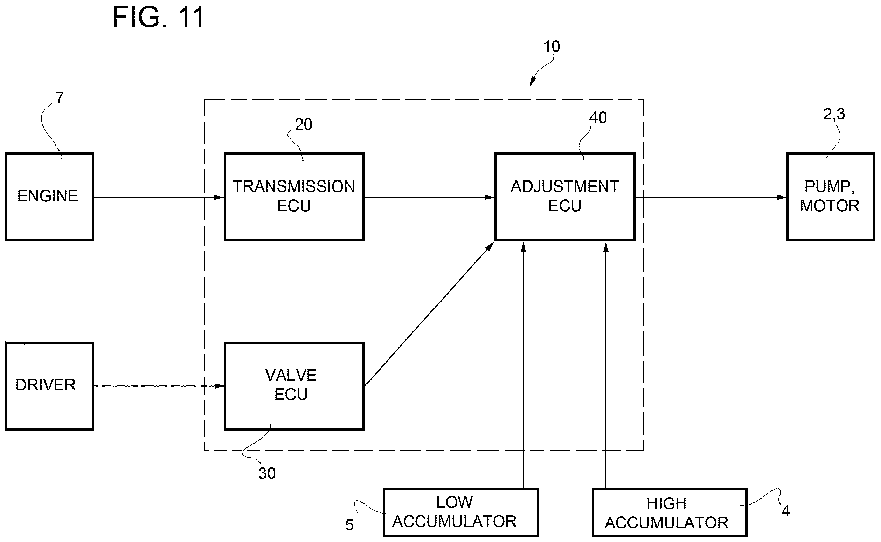

As disclosed in figure 11, control system 10 may comprise a first hydraulic control unit 20 configured to control swashplate angle of variable displacement pump 2 and motor 3 on the basis of the operation of engine 7, a hydraulic transmission control unit 30 configured to control valves I-VIII on the basis of driver's exigence, the operation of engine 7 and the status of charge of accumulators 4 and 5 and a second hydraulic control unit 40 configured to correct the swashplate angle of pump 2 and motor 3 on the basis of the set angle and the status of charge of accumulators 4 and 5. Each of such control units 20, 30 and 40 comprises elaborations means configured to elaborate values received as input to generate output values and memorizing means configured to memorize such input and output values.

In particular, first hydraulic control unit 20 is electronically connected to engine 7 to receive as inputs the angular velocity of engine 7 and the vehicle speed, control unit 20 is configured to elaborate such values to calculate an optimized value of swashplate angle of variable displacement pump 2 and motor 3 and to communicate engine input values to transmission control unit 30.

Transmission control unit 30 is configured to receive as input from control unit 20 angular velocity of engine 7 and the vehicle speed, driver's commands, such as acceleration, brake, FNR (i.e. Forward Neutral Revers, the transmission status), from, e.g., an ECU of the vehicle, and state of charge of accumulators 4, 5. Such input values are elaborated to control the opening of valves I-VIII, i.e. allowing or not the passage of fluid through themselves, on the base of a control method consequent to the below possible modes of operation.

According to a first mode of operation of the hydraulic transmission 1 as disclosed in figure 2, all valves I-VIII do not allow passage of fluid through themselves. Such operation corresponds to a normal forward motion of hydrostatic transmission.

In such configuration, pump 2 is carried by engine 7 and pumps from its first connection line 2a high pressure fluid via conducts 101, 109 and 104 into first connection line 3a of motor 3, which operates carrying forward the transmission of the vehicle. Consequently, low pressure fluid flows from second connection line 3b of motor 3 via conduits 105, 114 and 108 into second connection line 2b of pump 2. Relief valve 111 detects a difference of pressure between conducts 101 and 108, thereby allowing passage of fluid through itself, while relief valve 112 detects, between conduits 110 and 104, an opposite difference of pressure with respect to valve 111, thereby not allowing passage of fluid through itself.

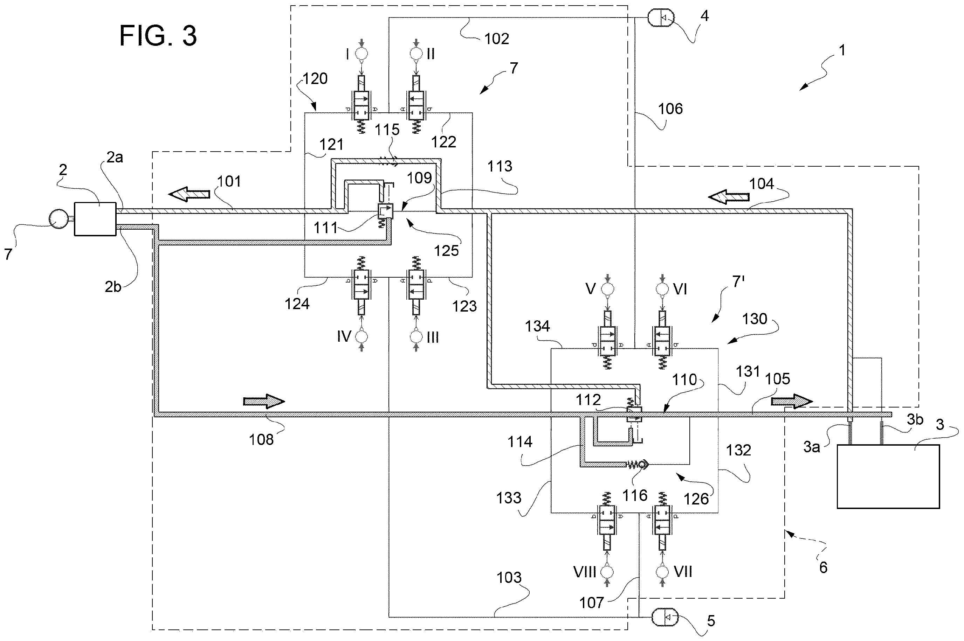

According to a second mode of operation of the hydraulic transmission 1 as disclosed in figure 3, all valves I-VIII do not allow passage of fluid through themselves. Such operation corresponds to a normal reverse motion of hydrostatic transmission.

In such configuration, opposite to the first mode of operation, pump 2 is carried by engine 7 and pumps from its second connection line 2b high pressure fluid via conducts 108, 110 and 105 into second connection line 3b of motor 3, which operates carrying reversely the transmission of the vehicle. Consequently, low pressure fluid flows from firs connection line 3a of motor 3 via conduits 104, 113 and 101 into first connection line 2a of pump 2. Relief valve 112 detects a difference of pressure between conducts 108 and 104, thereby allowing passage of fluid through itself, while relief valve 111 detects, between conduits 101 and 108, an opposite difference of pressure with respect to valve 112, thereby not allowing passage of fluid through itself.

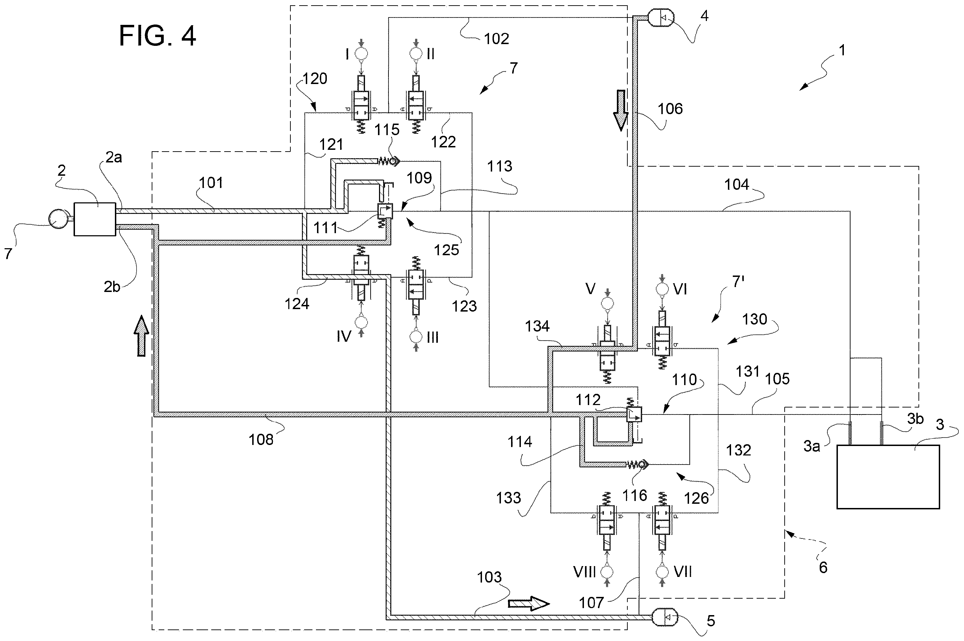

According to a third mode of operation of the hydraulic transmission 1 as disclosed in figure 4, only valves IV and V allow passage of fluid through themselves. Such operation corresponds to a start-stop operation of pump 2 which works as an hydraulic motors so as to provide a torque to the engine 7 so as to drag this latter..

In such configuration, engine 7 is not operative and pressure of fluid stored in high pressure accumulator 4 is used to carry engine 7 to help its start. Since valve V is opened, fluid flows through conduits 106, 134, and 108 to second connection line 2b of pump 2 which carries engine 7 to help its start. Then, since valve IV is opened, low pressure fluid passes through conduits 101, 124 and 103 to low pressure accumulator 5, recharging this latter. Both relief valves 111, 112 do not allow passage of fluid through themselves because they detect a not suitable difference of pressure between their pilot pressure inputs.

Summarizing, control system 10 would detect that engine is OFF, i.e. shut down, that high pressure accumulator 4 is fully charged/ready, that low pressure accumulator 5 is fully discharged/ready, that the accelerator is ON, that the brake is OFF, that pump 2 is in inverse displacement and that motor 3 is at zero displacement.

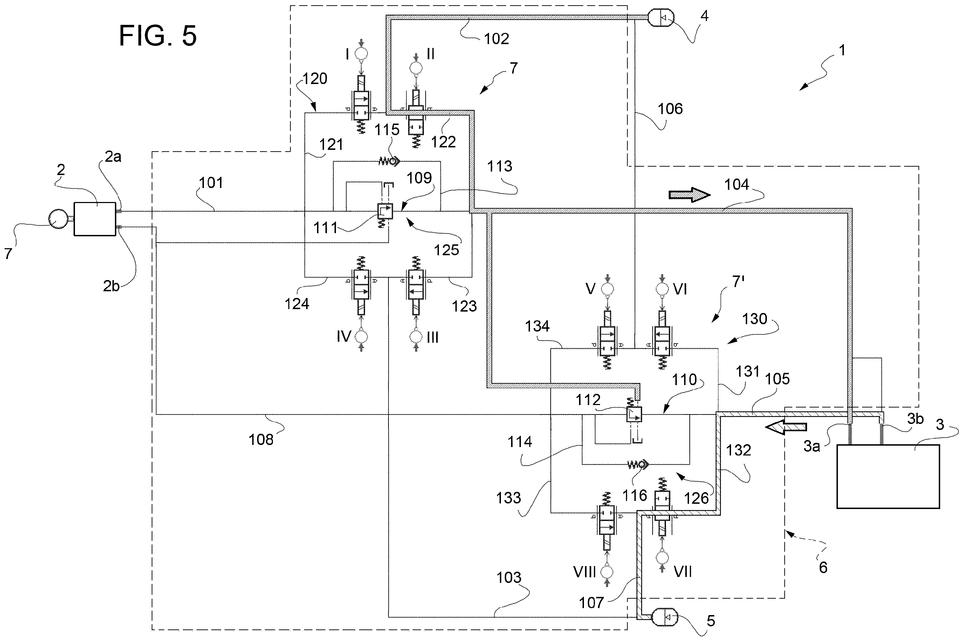

According to a fourth mode of operation of the hydraulic energy management system for hydrostatic transmission 1 as disclosed in figure 5, only valves II and VII allow passage of fluid through themselves. Such operation corresponds to a fully hydraulic forward eco motion of hydrostatic transmission.

In such configuration, engine 7 is not operative and pump 2 is at zero displacement, i.e. is not working, and pressure of fluid stored in high pressure accumulator 4 is used to carry hydraulic motor 3 to move forward transmission of the vehicle. Since valve II is opened, fluid flows through conduits 102, 122, and 104 to first connection line 3a of motor 3 which carries forward the transmission, even if pump 2 is at zero displacement. Then, since valve VII is opened, low pressure fluid passes from second connection line 3b of motor 3, through conduits 105, 132 and 107, to low pressure accumulator 5, recharging this latter. Both relief valves 111, 112 do not allow passage of fluid through themselves because they detect a not suitable difference of pressure between their pilot pressure inputs.

Summarizing, control system 10 would detect that engine is ON at minimum, i.e. which works at low idle, that high pressure accumulator 4 is fully charged/ready, that low pressure accumulator 5 is fully discharged/ready, that the accelerator is ON, that the brake is OFF, that pump 2 is at zero displacement and that motor 3 is controlled by control unit 10.

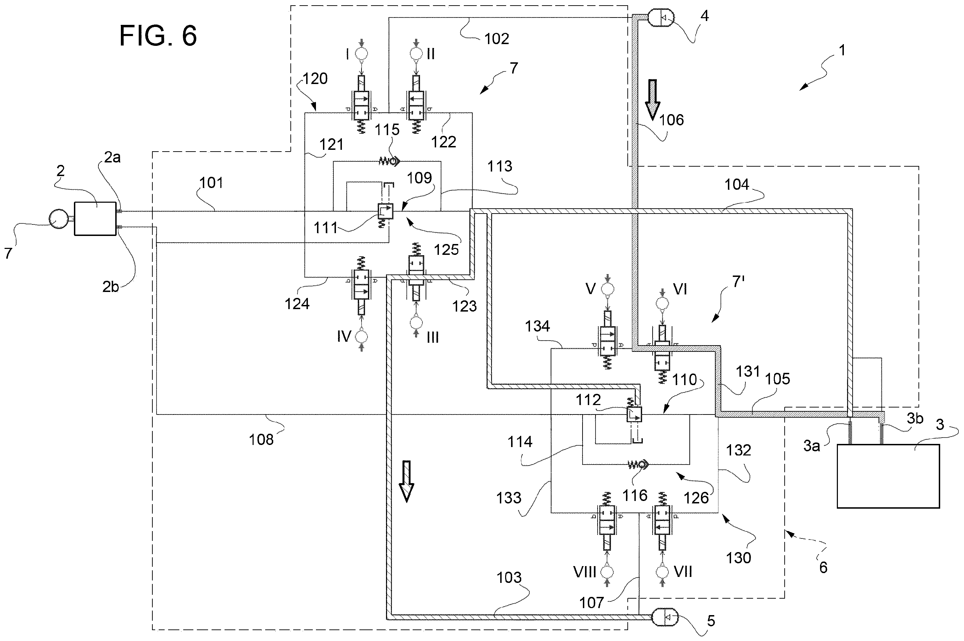

According to a fifth mode of operation of the hydraulic transmission 1 as disclosed in figure 6, only valves III and VI allow passage of fluid through themselves. Such operation corresponds to a fully hydraulically reverse eco mode of hydrostatic transmission.

In such configuration, engine 7 is not operative and pump 2 is at zero displacement, i.e. is not working, and pressure of fluid stored in high pressure accumulator 4 is used to carry motor 3 to move reversely transmission of the vehicle. Since valve VI is opened, fluid flows through conduits 106, 131 and 105 to second connection line 3b of motor 3 which carries reversely the transmission, even if pump 2 is at zero displacement. Then, since valve III is opened, low pressure fluid passes from first connection line 3a of motor 3, through conduits 104, 123 and 103 to low pressure accumulator 5, recharging this latter. Both relief valves 111, 112 do not allow passage of fluid through themselves because they detect a not suitable difference of pressure between their pilot pressure inputs.

Summarizing, control system 10 would detect that engine is ON at minimum, i.e. which works at low idle, that high pressure accumulator 4 is fully charged/ready, that low pressure accumulator 5 is fully discharged/ready, that the accelerator is ON, that the brake is OFF, that pump 2 is at zero displacement and that motor 3 is controlled by control unit 10.

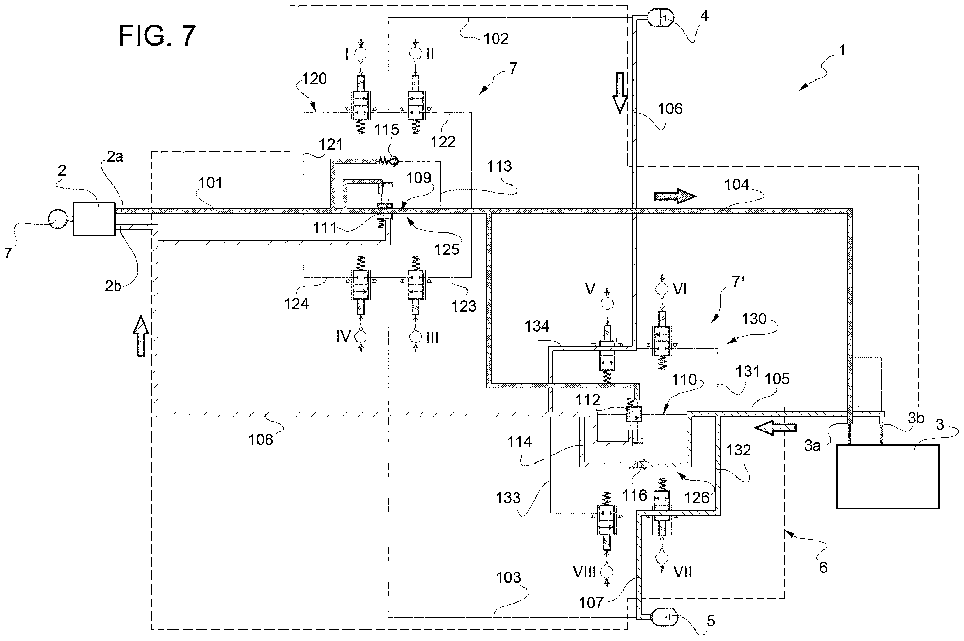

According to a sixth mode of operation of the hydraulic transmission 1 as disclosed in figure 7, only valves V and VII allow passage of fluid through themselves. Such operation corresponds to a forward power boost of motor 3.

In such configuration, pump 2 is carried by engine 7 and pumps from its first connection line 2a high pressure fluid via conducts 101, 109 and 104 into first connection line 3a of motor 3, which operates carrying forward the transmission of the vehicle. Consequently, low pressure fluid flows from second connection line 3b of motor 3 via conduits 105, 114 and 108 into second connection line 2b of pump 2. Relief valve 111 detects a difference of pressure between conducts 101 and 108, thereby allowing passage of fluid through itself, while relief valve 112 detects, between conduits 108 and 104, an opposite difference of pressure with respect to valve 111, thereby not allowing passage of fluid through itself. Moreover, since valves V and VII are opened, fluid from high pressure accumulator 4 flow through conduits 106 and 134 and merges with fluid coming from conduit 114 and part of fluid coming from second connection line 3b of motor 3 flows from conduit 105 through conduits 132 and 107 to recharge low pressure accumulator 5. In this way, the differential of pressure between first and second connection line 2a, 2b of pump 2 is increased, thereby increasing the power transmitted to motor 3.

Summarizing, control system 10 would detect that engine is ON, that high pressure accumulator 4 is fully charged/ready, that low pressure accumulator 5 is fully discharged/ready, that the accelerator is ON, that the brake is OFF, that pump 2 and motor 3 are controlled by control unit 10.

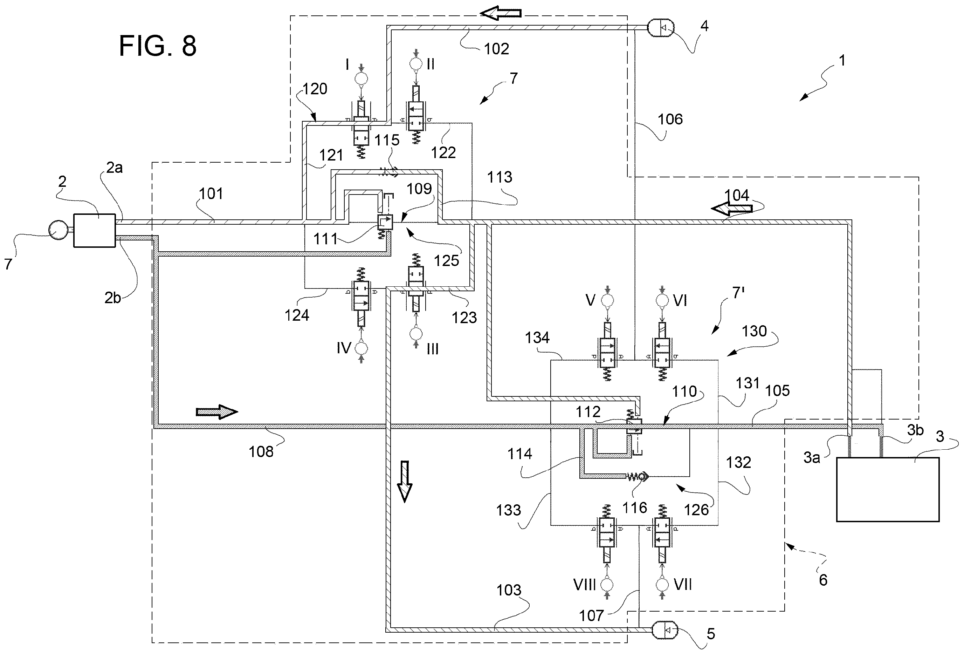

According to a seventh mode of operation of the hydraulic transmission 1 as disclosed in figure 8, only valves I and III allow passage of fluid through themselves. Such operation corresponds to a reverse power boost of hydrostatic transmission.

In such configuration, opposite to the first mode of operation, pump 2 is carried by engine 7 and pumps from its second connection line 2b high pressure fluid via conducts 108, 110 and 105 into second connection line 3b of motor 3, which operates carrying reversely the transmission of the vehicle. Consequently, low pressure fluid flows from first connection line 3a of motor 3 via conduits 104, 113 and 101 into first connection line 2a of pump 2. Relief valve 112 detects a difference of pressure between conducts 108 and 104, thereby allowing passage of fluid through itself, while relief valve 111 detects, between conduits 101 and 108, an opposite difference of pressure with respect to valve 112, thereby not allowing passage of fluid through itself. Moreover, since valves I and VIII are opened, fluid from high pressure accumulator 4 flow through conduits 102 and 120 and merges with fluid coming from conduit 113 and part of fluid coming from first connection line 3a of motor 3 flows from conduit 104 through conduits 123 and 103 to recharge low pressure accumulator 5. In this way, the differential of pressure between first and second connection line 2a, 2b of pump 2 is increased, thereby increasing the power transmitted to motor 3.

Summarizing, control system 10 would detect that engine is ON, that high pressure accumulator 4 is fully charged/ready, that low pressure accumulator 5 is fully discharged/ready, that the accelerator is ON, that the brake is OFF, that pump 2 and motor 3 are controlled by control unit 10.

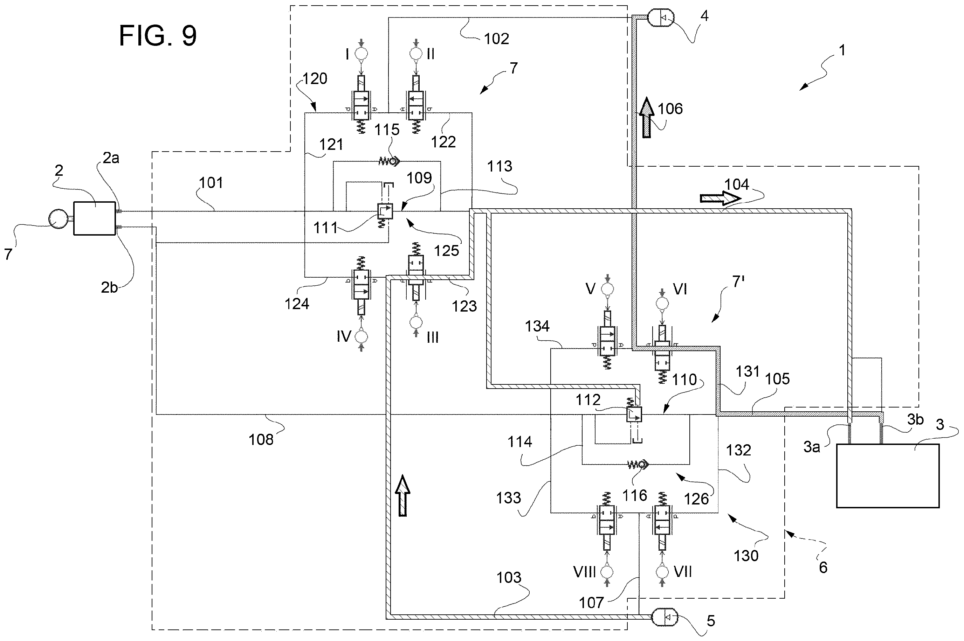

According to an eighth mode of operation of the hydraulic transmission 1 as disclosed in figure 9, only valves III and VI allow passage of fluid through themselves. Such operation corresponds to a forward regenerative braking.

In such configuration, engine 7 is not operative and pump 2 is at zero displacement, i.e. is not working, and braking of transmission carried forward by motor 3 is used for recharging high pressure accumulator 4. Since valve VI is opened, fluid comes from second connection line 3b of motor 3 and flows through conduits 105, 131 and 106 to high pressure accumulator 4 recharging this latter. Then, since valve III is opened, fluid from low pressure accumulator 5 flows through conduits 103, 123 and 104 to first connection line 3a of motor 3. Both relief valves 111, 112 do not allow passage of fluid through themselves because they detect a not suitable difference of pressure between their pilot pressure inputs.

Summarizing, control system 10 would detect that engine is ON at minimum, i.e. working at low idle, that high pressure accumulator 4 is fully discharged/ready, that low pressure accumulator 5 is fully charged/ready, that the accelerator is OFF, that the brake is ON, that pump 2 is at zero displacement and motor 3 is controlled by control unit 10.

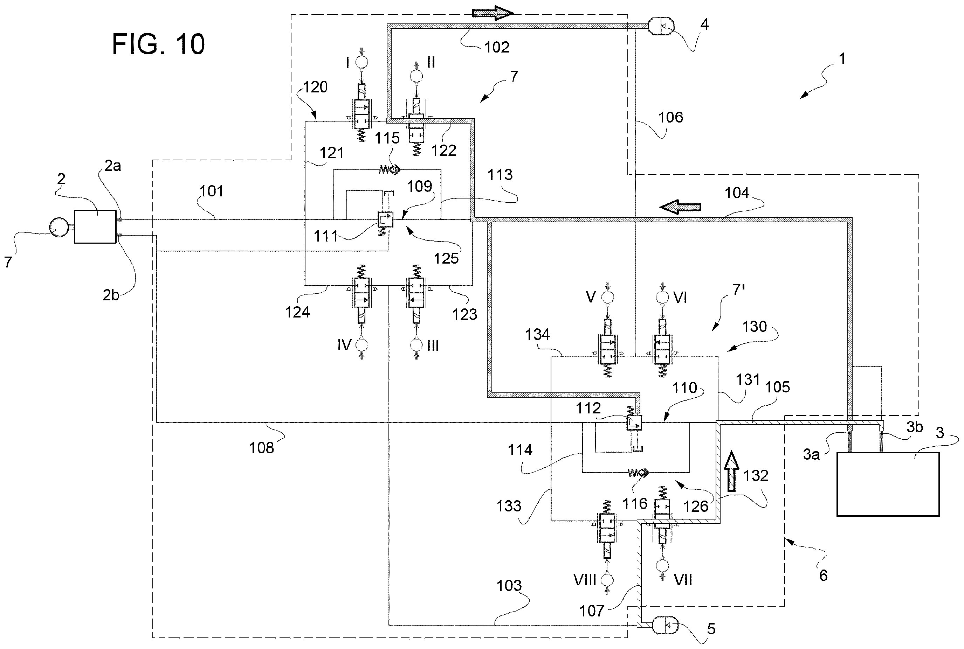

According to a ninth mode of operation of the hydraulic transmission 1 as disclosed in figure 10, only valves II and VII allow passage of fluid through themselves. Such operation corresponds to a reverse regenerative braking.

In such configuration, engine 7 is not operative and pump 2 is at zero displacement, i.e. is not working, and braking of transmission carried reversely by motor 3 is used for recharging high pressure accumulator 4. Since valve II is opened, fluid comes from first connection line 3a of motor 3 and flows through conduits 104, 122 and 102 to high pressure accumulator 4 recharging this latter. Then, since valve VII is opened, fluid from low pressure accumulator 5 flows through conduits 107, 132 and 105 to second connection line 3b of motor 3. Both relief valves 111, 112 do not allow passage of fluid through themselves because they detect a not suitable difference of pressure between their pilot pressure inputs.

Summarizing, control system 10 would detect that engine is ON at minimum or OFF, that high pressure accumulator 4 is fully discharged/ready, that low pressure accumulator 5 is fully charged/ready, that the accelerator is OFF, that the brake is ON, that pump 2 is at zero displacement and motor 3 is controlled by control unit 10.

The present invention is also related to a control method, which is applied by control system 10, to set the opening of valves I-VIII so as to define one of the above mentioned possible operations. Such method comprises the following steps:
- detecting values related to engine 7, to accumulators 4, 5, to acceleration and braking of the vehicle, to pump 2 and motor 3;
- elaborating said values to define one possible mode of operation between a plurality of pre-set modes memorized in the control system; and
- if one possible mode of operation is defined, set valves I-VIII opening according to such possible mode of operation, otherwise if no possible mode of operation is defined, set valves I-VIII opening according to a standard mode of operation.

Advantageously the detected values may be engine rotation speed, vehicle speed about engine 7, acceleration, braking or FNR about driver's settings, swashplate angle of pump 2 and/or motor 3, fluid pressure levels of accumulators 4 and 5.

Advantageously the standard mode of operation may be the first or the second (depending on direction of movement of the vehicle) above described modes of operation. The possible preset modes may be the seven operation modes described above from third to ninth operation modes.

If all the conditions set in the related operation mode are met, control system 10 controls valves I - VIII to position accordingly to achieve the most suitable operation mode.

If at least one of the conditions are not met, control system 10 maintains valves I - VIII so as to remain in standard condition.

Control method operated by control system 10 may be advantageously operated automatically by a program configured to run supported by elaboration and memorizing means of control units of control system 10.

According to an alternative embodiment of the above described layout according to the present invention, not shown, subunit 7' only comprises three valves, i.e. valves V-VII, therefore conduit 133 and valve VIII are not present.

The operation of such embodiment is the same of the latter; indeed in all possible above described modes of operation, valve VIII is always closed and therefore, being absent, is like being always positioned so as not to allow a passage of fluid.

In view of the foregoing, the advantages of a hydraulic transmission 1 according to the invention are apparent.

The disclosed layout imply a limited maximum number of valves, thereby reduces encumbrances, complexity and costs of transmission 1. Moreover, the limited number of valves allow to reduce pressure drops into transmission 1.

Moreover, only hydro-mechanical valves, i.e. relief valves 111, 112 are fluidly interposed on direct fluid connection, i.e. conduits 101-104-109 and 108-110-105 between pump 2 and motor 3. Such hydro-mechanical valves have a negligible pressure drop, thereby increasing the efficiency of the system.

Further the use of all equal valves I-VIII allows to standardize the components of transmission 1, thereby decreasing its costs.

The possibility of realizing a plurality of logic making combinations of fluid paths between pump 2, motor 3 and accumulators 4, 5 allows to design a plurality of operating modes in an optimized and customable way.

Further, valves are all electro-actuated valves, therefore the logic may be easily implemented in purely electronic control method.

Sensors number is reduced with respect to known systems, therefore the complexity of known transmissions is avoided and costs and encumbrances are decreased.

Operation modes are many with the same electrohydraulic circuit, therefore the system is versatile and may be implemented in a great variety of vehicles.

It is clear that modifications can be made to the described hydraulic transmission 1 which do not extend beyond the scope of protection defined by the claims.

For example, the description has been disclosed taking into account only one pump 2 and one motor 3, however it is clear that number of such element may be increased in function of power needs of the vehicle.

Further valves I-VIII may be any typology of ON-OFF electro-actuated valves, e.g. three ways- three positions valves, proportional and many other. It could also be possible, although increasing complexity of the circuit, to manage control of such valves hydraulically.

Further it is clear that control system 10 may comprise a single ECU receiving all necessary signals from engine 7, driver and accumulators 4,5 and control pump 2 and motor 3 consequently.

## Claims

1. Hydraulic energy management system for hydrostatic transmission for a work vehicle, said system comprising
- a pump (2) carried by an engine (7) and at least a hydraulic motor (3), said pump (2) and said motor (3) being configured to operate with a fluid in pressure passing through themselves,
- a first and a second accumulator (4, 5) configured to store said fluid in pressure,
- a hydraulic connection module (6) fluidly connecting together said pump (2), said motor (3) and said first and second accumulators (4, 5), said module (6) comprising
a first subunit (7) and a second subunit (7'), each of said first and second subunits (7, 7') comprising a hydro-mechanical valve group (125, 126) fluidly interposed between pump (2) and motor (3) on respective conduits (101, 109, 140; 108,110, 105), said hydro-mechanical valve groups (125, 126) being configured to regulate passage of fluid through said respective conduits (101, 109, 140; 108,110, 105) according to the direction of said fluid,
each of said first and second subunits (7, 7') further comprising a path (120, 130) being fluidly interposed in parallel to said valve group (125, 126) and fluidly connected to said pump (2), to said motor (3) and to said first and second accumulators (4, 5),
said first and second subunits (7, 7') further comprising a plurality of valves (I-VIII) fluidly interposed on said paths (120, 130) configured to allows different paths of said fluid between said pump (2), said motor (3) and said accumulators (4, 5) according to their opening status;
the system being **characterized in that** said first subunit (7) comprises four valves (I-IV) fluidly interposed on said path (120), a first valve (I) between said pump (2) and said first accumulator (4), a second valve (II) between said first accumulator (4) and said motor (3), a third valve (III) between said motor (3) and said second accumulator (5), a fourth valve (IV) between said second accumulator (5) and said pump (2), and
said second subunit (7') comprises at least three valves (V-VII) fluidly interposed on said path (130), a fifth valve (V) between said pump (2) and said first accumulator (4), a sixth valve (VI) between said first accumulator (4) and said motor (3), a seventh valve (VII) between said motor (3) and said second accumulator (5)

2. Hydraulic energy management system for hydrostatic transmission according to claim 1, wherein said second subunit (7') comprises an eighth valve (VIII) between said second accumulator (5) and said pump (2).

3. Hydraulic energy management system for hydrostatic transmission according to claim 1 or 2, wherein at least one (120) of said paths (120, 130) is a closed path.

4. Hydraulic energy management system for hydrostatic transmission according to any of the preceding claims, wherein said valves (I-VIII) are ON-OFF electro-actuated proportional valves

5. Hydraulic energy management system for hydrostatic transmission according to any of the preceding claims ,wherein each of said hydro-mechanical valve groups (125, 126) comprises a respective relief valve (111, 112) fluidly interposed on said conduit (109, 110).

6. Hydraulic energy management system for hydrostatic transmission according to claim 5 , wherein each of said hydro-mechanical valve groups (125, 126) further comprises a valve (115, 116) fluidly in parallel with respect to the respective relief valve (125, 126).

7. Hydraulic energy management system for hydrostatic transmission according to claims 5 or 6, wherein said relief valve (111) of said first subunit (7)is piloted by a pair of pressure signals respectively sensed on the conduit (108) fluidly connecting pump (2) with second subunit (7') and on conduit (109) by-passing said path (120), and said relief valve (112) of said second subunit (7') is piloted by a pair of pressure signals respectively sensed on the conduit (104) fluidly connecting motor (3) with first subunit (7) and on conduit (110) by-passing said path (130).

8. Hydraulic energy management system for hydrostatic transmission according to claims 6 or 7, wherein said valve (115, 116) is a check valve.

9. Hydraulic energy management system for hydrostatic transmission according to any of the preceding claims, further comprising a control system (10) electrically connected to said engine (7), said accumulators (4, 5) said pump (2), said motor (3), said valves (I-VII, VIII) and to a control unit of said vehicle, said control system (10) being configured to detect operating values of the aforementioned elements of said transmission (1) so as to elaborate these latter to control the opening of said valves (I-VII, VIII).

10. Method for controlling opening of valves (I-VII, VIII) in a hydraulic energy management system for hydrostatic transmission as claimed in any of the preceding claims, comprising the following steps:
• detecting values related to said engine (7), to said accumulators (4, 5), to acceleration and braking of said vehicle, to said pump (2) and said motor (3);
• elaborating said values to define one possible mode of operation between a plurality of pre-set modes memorized in said control system (10); and
• if one possible mode of operation is defined, set valves opening (I-VII, VIII) according to such possible mode of operation, otherwise if no possible mode of operation is defined, set valves opening (I-VII, VIII) according to a standard mode of operation.

11. Method according to claim 10, wherein the detected values comprise at least engine rotation speed, vehicle speed, acceleration, braking or FNR, swashplate angle of pump (2) and/or of motor (3), fluid pressure levels of accumulators (4, 5).

12. Method according to claims 10 or 11, wherein the standard mode of operation correspond to a position of valves (I-VII, VIII) in which vehicles moves forward or rearward.

13. Method according to any of claims 10 to 12, wherein said standard mode of operation can be selected among at least the following preset modes:
• Start-stop in which valves IV and V are configured to allow passage of fluid while the remaining valve are configured to not allow passage of fluid;
• ECO forward mode in which valves II and VII are configured to allow passage of fluid while the remaining valve are configured to not allow passage of fluid;
• Forward Power Boost in which valves V and VII are configured to allow passage of fluid while the remaining valve are configured to not allow passage of fluid;
• Forward Braking Recovery in which valves III and VI are configured to allow passage of fluid while the remaining valve are configured to not allow passage of fluid;
• ECO rearward mode in which valves III and VI are configured to allow passage of fluid while the remaining valve are configured to not allow passage of fluid;
• Rearward Power Boost in which valves I and III are configured to allow passage of fluid while the remaining valve are configured to not allow passage of fluid; and
• Rearward Braking Recovery in which valves II and VII are configured to allow passage of fluid while the remaining valve are configured to not allow passage of fluid.

## Patentansprüche

1. Hydraulisches Energieverwaltungssystem für ein hydrostatisches Getriebe eines Arbeitsfahrzeugs, wobei das System aufweist:
eine Pumpe (2), die von einer Kraftmaschine (7) getragen wird und mindestens einen hydraulischen Motor (3), wobei die Pumpe (2) und der Motor (3) dazu eingerichtet sind, mit einem unter Druck stehenden Fluid, das dieselben durchströmt, zu arbeiten,
einen ersten und einen zweiten Speicher (4, 5), die dazu eingerichtet sind, das unter Druck stehende Fluid zu speichern,
ein hydraulisches Verbindungsmodul (6), das die Pumpe (2), den Motor (3) und den ersten und zweiten Speicher (4, 5) fluidisch miteinander verbindet, wobei das Modul (6) eine erste Untereinheit (7) und eine zweite Untereinheit (7') aufweist, wobei jede der ersten und der zweiten Untereinheit (7, 7') eine hydromechanische Ventilgruppe (125, 126) aufweist, die fluidisch zwischen der Pumpe (2) und dem Motor (3) in jeweilige Leitungen (101, 109, 140; 108, 110, 105) eingefügt ist, wobei die hydromechanischen Ventilgruppen (125, 126) dazu eingerichtet sind, den Durchfluss von Fluid durch die jeweiligen Leitungen (101, 109, 140; 108, 110, 105) gemäß der Fließrichtung des Fluids zu steuern,
wobei jede der ersten und der zweiten Untereinheit (7, 7') des Weiteren einen Pfad (120, 130) aufweist, der fluidisch parallel zu der Ventilgruppe (125, 126) eingefügt ist und mit der Pumpe (2), dem Motor (3) und dem ersten und zweiten Speicher (4, 5) fluidisch verbunden ist,
wobei die erste und die zweite Untereinheit (7, 7') des Weiteren eine Mehrzahl von Ventilen (I-VIII) aufweisen, die in den Pfaden (120, 130) fluidisch eingefügt sind und dazu eingerichtet sind, unterschiedliche Pfade des Fluids zwischen der Pumpe (2), dem Motor (3) und den Speichern (4, 5) gemäß ihres Öffnungsstatus zu ermöglichen;
wobei das System **dadurch gekennzeichnet ist, dass** die erste Untereinheit (7) vier Ventile (I-IV) aufweist, die in dem Pfad (120) fluidisch eingefügt sind, ein erstes Ventil (I) zwischen der Pumpe (2) und dem ersten Speicher (4), ein zweites Ventil (II) zwischen dem ersten Speicher (4) und dem Motor (3), ein drittes Ventil (III) zwischen dem Motor (3) und dem zweiten Speicher (5), ein viertes Ventil (IV) zwischen dem zweiten Speicher (5) und der Pumpe (2), und
wobei die zweite Untereinheit (7') mindestens drei Ventile (V-VII) aufweist, die fluidisch in dem Pfad (130) eingefügt sind, ein fünftes Ventil zwischen der Pumpe (2) und dem ersten Speicher (4), ein sechstes Ventil (VI) zwischen dem ersten Speicher (4) und dem Motor (3), ein siebtes Ventil (VII) zwischen dem Motor (3) und dem zweiten Speicher (5).

2. Hydraulisches Energieverwaltungssystem für ein hydrostatisches Getriebe nach Anspruch 1, wobei die zweite Untereinheit (7') ein achtes Ventil (VIII) zwischen dem zweiten Speicher (5) und der Pumpe (2) aufweist.

3. Hydraulisches Energieverwaltungssystem für ein hydrostatisches Getriebe nach Anspruch 1 oder 2, wobei mindestens einer (120) der Pfade (120, 130) ein geschlossener Pfad ist.

4. Hydraulisches Energieverwaltungssystem für ein hydrostatisches Getriebe nach einem der vorhergehenden Ansprüche, wobei die Ventile (I bis VIII) elektrisch betätigte Ein-Aus-Proportionalventile sind.

5. Hydraulisches Energieverwaltungssystem für ein hydrostatisches Getriebe nach einem der vorhergehenden Ansprüche, wobei jede der hydromechanischen Ventilgruppen (125, 126) jeweils ein Überdruckventil (111, 112) aufweist, das in die Leitung (109, 110) fluidisch eingefügt ist.

6. Hydraulisches Energieverwaltungssystem für ein hydrostatisches Getriebe nach Anspruch 5, wobei jede der hydromechanischen Ventilgruppen (125, 126) des Weiteren ein Ventil (115, 116) aufweist, das fluidisch parallel zu dem jeweiligen Überdruckventil (125, 126) angeordnet ist.

7. Hydraulisches Energieverwaltungssystem für ein hydrostatisches Getriebe nach Anspruch 5 oder 6, wobei das Überdruckventil (111) der ersten Untereinheit (7) durch ein Paar von Drucksignalen betätigt wird, die jeweils in der Leitung (108), die die Pumpe (2) mit der zweiten Untereinheit (7') verbindet, und in der Leitung (109), die den Pfad (120) umgeht, erfasst werden, und das Überdruckventil (112) der zweiten Untereinheit (7') durch ein Paar von Drucksignalen betätigt wird, die jeweils in der Leitung (104), die den Motor (3) mit der ersten Untereinheit (7) verbindet, und in der Leitung (110), die den Pfad (130) umgeht, erfasst werden.

8. Hydraulisches Energieverwaltungssystem für ein hydrostatisches Getriebe nach Anspruch 6 oder 7, wobei das Ventil (115, 116) ein Rückschlagventil ist.

9. Hydraulisches Energieverwaltungssystem für ein hydrostatisches Getriebenach einem der vorhergehenden Ansprüche, das des Weiteren ein Steuersystem (10) aufweist, das elektrisch mit der Kraftmaschine (7), den Speichern (4, 5), der Pumpe (2), dem Motor (3), den Ventilen (I-VII, VIII) und mit einer Steuereinheit des Fahrzeugs verbunden ist, wobei das Steuersystem (10) dazu eingerichtet ist, Betriebswerte der oben genannten Elemente des Getriebes (1) zu ermitteln, um diese letzteren zur Steuerung der Öffnung der Ventile (I-VII, VIII) zu verarbeiten.

10. Verfahren zum Steuern des Öffnens von Ventilen (I-VII, VIII) in einem hydraulischen Energieverwaltungssystem für ein hydrostatisches Getriebe nach einem der vorhergehenden Ansprüche, das die nachfolgenden Schritte aufweist:
• Ermitteln von Werten, die in Beziehung zu der Kraftmaschine (7), den Speichern (4, 5), dem Beschleunigen und dem Bremsen des Fahrzeugs, der Pumpe (2) und dem Motor (3) stehen;
• Verarbeiten der Werte zum Definieren einer möglichen Betriebsart aus einer Mehrzahl von vorbestimmten Betriebsarten, die in dem Steuersystem (10) gespeichert sind; und
• wenn eine mögliche Betriebsart definiert ist, Einstellen der Ventilöffnungen (I-VII, VIII) gemäß der möglichen Betriebsart, andernfalls, wenn keine mögliche Betriebsart definiert ist, Einstellen der Ventilöffnungen (I-VII, VIII) gemäß einer Standardbetriebsart.

11. Verfahren nach Anspruch 10, wobei die erfassten Werte mindestens eine Kraftmaschinendrehgeschwindigkeit, eine Fahrzeuggeschwindigkeit, ein Beschleunigen, ein Bremsen oder ein FNR, einen Taumelscheibenwinkel der Pumpe (2) und/oder des Motors (3) und Fluiddruckniveaus der Speicher (4, 5) aufweisen.

12. Verfahren nach Anspruch 10 oder 11, wobei die Standardbetriebsart einer Position der Ventile (I-VII, VIII) entspricht, in der das Fahrzeug sich vorwärts oder rückwärts bewegt.

13. Verfahren nach einem der Ansprüche 10 bis 12, wobei die Standardbetriebsart aus mindestens einer der folgenden, vorbestimmten Betriebsarten gewählt werden kann:
• Start-Stopp, in welcher die Ventile IV und V dazu eingerichtet sind, einen Durchfluss von Fluid zu erlauben, während die übrigen Ventile dazu eingerichtet sind, keinen Durchfluss von Fluid zu erlauben;
• ECO Vorwärts Betriebsart, in welcher die Ventile II und VII dazu eingerichtet sind, einen Durchfluss von Fluid zu erlauben, während die übrigen Ventile dazu eingerichtet sind, keinen Durchfluss von Fluid zu erlauben;
• Vorwärts Power-Boost, in welcher die Ventile V und VII dazu eingerichtet sind, einen Durchfluss von Fluid zu erlauben, während die übrigen Ventile dazu eingerichtet sind, keinen Durchfluss von Fluid zu erlauben;
• Vorwärts Bremsrückgewinnung, in welcher die Ventile III und VI dazu eingerichtet sind, einen Durchfluss von Fluid zu erlauben, während die übrigen Ventile dazu eingerichtet sind, keinen Durchfluss von Fluid zu erlauben;
• ECO Rückwärts Betriebsart, in welcher die Ventile III und VI dazu eingerichtet sind, einen Durchfluss von Fluid zu erlauben, während die übrigen Ventile dazu eingerichtet sind, keinen Durchfluss von Fluid zu erlauben;
• Rückwärts Power-Boost, in welcher die Ventile I und III dazu eingerichtet sind, einen Durchfluss von Fluid zu erlauben, während die übrigen Ventile dazu eingerichtet sind, keinen Durchfluss von Fluid zu erlauben;
• Rückwärts Bremsrückgewinnung, in welcher die Ventile II und VII dazu eingerichtet sind, einen Durchfluss von Fluid zu erlauben, während die übrigen Ventile dazu eingerichtet sind, keinen Durchfluss von Fluid zu erlauben.

## Revendications

1. - Système de gestion de l'énergie hydraulique pour transmission hydrostatique d'un véhicule de travail, ledit système comprenant
- une pompe (2) portée par un moteur (7) et au moins un moteur hydraulique (3), ladite pompe (2) et ledit moteur (3) étant configurés pour fonctionner avec un fluide sous pression les traversant,
- un premier et un second accumulateur (4, 5) configurés pour stocker ledit fluide sous pression,
- un module de connexion hydraulique (6) reliant fluidiquement entre eux ladite pompe (2), ledit moteur (3) et lesdits premier et second accumulateurs (4, 5), ledit module (6) comprenant
une première sous-unité (7) et une seconde sous-unité (7'), chacune de ces première et deuxième sous-unités (7, 7') comprenant un groupe de vannes hydromécaniques (125, 126) interposé fluidiquement entre la pompe (2) et le moteur (3) sur des conduits respectifs (101, 109, 140 ; 108, 110, 105), lesdits groupes de vannes hydromécaniques (125, 126) étant configurés pour réguler le passage du fluide dans lesdits conduits respectifs (101, 109, 140 ; 108, 110, 105) en fonction de la direction dudit fluide,
chacune desdites première et seconde sous-unités (7, 7') comprenant en outre un chemin (120, 130) fluidiquement interposé en parallèle audit groupe de vannes (125, 126) et fluidiquement relié à ladite pompe (2), audit moteur (3) et auxdits premier et second accumulateurs (4, 5),
lesdites première et seconde sous-unités (7, 7') comprenant en outre une pluralité de vannes (I-VIII) fluidiquement interposées sur lesdits chemins (120, 130) configurées pour permettre différents chemins dudit fluide entre ladite pompe (2), ledit moteur (3) et lesdits accumulateurs (4, 5) en fonction de leur état d'ouverture ;
le système étant **caractérisé en ce que** ladite première sous-unité (7) comprend quatre vannes (I-IV) fluidiquement interposées sur ledit chemin (120), une première vanne (I) entre ladite pompe (2) et ledit premier accumulateur (4), une deuxième vanne (II) entre ledit premier accumulateur (4) et ledit moteur (3), une troisième vanne (III) entre ledit moteur (3) et ledit second accumulateur (5), une quatrième vanne (IV) entre ledit second accumulateur (5) et ladite pompe (2), et ladite seconde sous-unité (7') comprend au moins trois vannes (V-VII) fluidiquement interposées sur ledit chemin (130), une cinquième vanne (V) entre ladite pompe (2) et ledit premier accumulateur (4), une sixième vanne (VI) entre ledit premier accumulateur (4) et ledit moteur (3), une septième vanne (VII) entre ledit moteur (3) et ledit second accumulateur (5).

2. Système de gestion de l'énergie hydraulique pour transmission hydrostatique selon la revendication 1, dans lequel ladite seconde sous-unité (7') comprend une huitième vanne (VIII) entre ledit second accumulateur (5) et ladite pompe (2).

3. Système de gestion de l'énergie hydraulique pour transmission hydrostatique selon la revendication 1 ou 2, dans lequel au moins un (120) desdits chemins (120, 130) est un chemin fermé.

4. Système de gestion de l'énergie hydraulique pour transmission hydrostatique selon l'une quelconque des revendications précédentes, dans lequel lesdites vannes (I-VIII) sont des vannes proportionnelles électro-actionnées ON-OFF.

5. Système de gestion de l'énergie hydraulique pour transmission hydrostatique selon l'une quelconque des revendications précédentes, dans lequel chacun desdits groupes de vannes hydromécaniques (125, 126) comprend une soupape de décharge respective (111, 112) fluidiquement interposée sur ledit conduit (109, 110).

6. Système de gestion de l'énergie hydraulique pour la transmission hydrostatique selon la revendication 5, dans lequel chacun desdits groupes de vannes hydromécaniques (125, 126) comprend en outre une vanne (115, 116) fluidiquement parallèle à la soupape de décharge respective (125, 126).

7. Système de gestion de l'énergie hydraulique pour transmission hydrostatique selon les revendications 5 ou 6, dans lequel ladite soupape de décharge (111) de ladite première sous-unité (7) est pilotée par une paire de signaux de pression respectivement détectés sur le conduit (108) reliant fluidiquement la pompe (2) à la seconde sous-unité (7') et sur le conduit (109) en contournant ledit chemin (120), et ladite soupape de décharge (112) de ladite seconde sous-unité (7') est pilotée par une paire de signaux de pression respectivement détectés sur le conduit (104) reliant fluidiquement le moteur (3) à la première sous-unité (7) et sur le conduit (110) contournant ledit chemin (130).

8. - Système de gestion de l'énergie hydraulique pour transmission hydrostatique selon les revendications 6 ou 7, dans lequel ladite vanne (115, 116) est un clapet anti-retour.

9. Système de gestion de l'énergie hydraulique pour transmission hydrostatique selon l'une quelconque des revendications précédentes, comprenant en outre un système de commande (10) relié électriquement audit moteur (7), auxdits accumulateurs (4, 5), à ladite pompe (2), audit moteur (3), auxdites vannes (I-VII, VIII) et à une unité de commande dudit véhicule, ledit système de commande (10) étant configuré pour détecter des valeurs de fonctionnement des éléments précités de ladite transmission (1) afin d'élaborer ces derniers pour commander l'ouverture desdites vannes (I-VII, VIII).

10. Procédé de commande de l'ouverture des vannes (I-VII, VIII) d'un système de gestion de l'énergie hydraulique pour transmission hydrostatique selon l'une quelconque des revendications précédentes, comprenant les étapes suivantes consistant à :
• détecter des valeurs relatives audit moteur (7), auxdits accumulateurs (4, 5), à l'accélération et au freinage dudit véhicule, à ladite pompe (2) et audit moteur (3) ;
• élaborer lesdites valeurs pour définir un mode de fonctionnement possible parmi une pluralité de modes préétablis mémorisés dans ledit système de commande (10) ; et
• si un mode de fonctionnement possible est défini, régler l'ouverture des vannes (I-VII, VIII) en fonction de ce mode de fonctionnement possible, sinon si aucun mode de fonctionnement possible n'est défini, régler l'ouverture des vannes (I-VII, VIII) en fonction d'un mode de fonctionnement standard.

11. - Procédé selon la revendication 10, dans lequel les valeurs détectées comprennent au moins la vitesse de rotation du moteur, la vitesse du véhicule, l'accélération, le freinage ou le commutateur FNR (marche avant-point mort-marche arrière), l'angle du plateau oscillant de la pompe (2) et/ou du moteur (3), les niveaux de pression du fluide des accumulateurs (4, 5).

12. Procédé selon les revendications 10 ou 11, dans lequel le mode de fonctionnement standard correspond à une position des vannes (I-VII, VIII) dans laquelle des véhicules se déplacent vers l'avant ou vers l'arrière.

13. Procédé selon l'une quelconque des revendications 10 à 12, dans lequel le mode de fonctionnement standard peut être sélectionné parmi au moins les modes prédéfinis suivants :
• le mode démarrage-arrêt dans lequel les vannes IV et V sont configurées pour permettre le passage de fluide tandis que les autres vannes sont configurées pour ne pas permettre le passage de fluide ;
• le mode ECO avant dans lequel les vannes II et VII sont configurées pour permettre le passage de fluide tandis que les autres vannes sont configurées pour ne pas permettre le passage de fluide ;
• le mode Power Boost avant dans lequel les vannes V et VII sont configurées pour permettre le passage de fluide tandis que les autres vannes sont configurées pour ne pas permettre le passage de fluide ;
• le mode récupération du freinage en marche avant dans lequel les vannes III et VI sont configurées pour permettre le passage de fluide tandis que les autres vannes sont configurées pour ne pas permettre le passage de fluide
• le mode ECO arrière dans lequel les vannes III et VI sont configurées pour permettre le passage de fluide tandis que les autres vannes sont configurées pour ne pas permettre le passage de fluide ;
• le mode Power Boost arrière dans lequel les vannes I et III sont configurées pour permettre le passage de fluide tandis que les autres vannes sont configurées pour ne pas permettre le passage de fluide ; et
• le mode récupération du freinage en marche arrière dans lequel les vannes II et VII sont configurées pour permettre le passage de fluide tandis que les autres vannes sont configurées pour ne pas permettre le passage de fluide.
